# FASCICULE DE BREVET EUROPEEN

(11) **EP 1 517 118 B1**
(45) Date de publication et mention de la délivrance du brevet: **14.07.2010**
(21) Numéro de dépôt: 04103966.0
(22) Date de dépôt: 18.08.2004
(51) Int. Cl.: G01D 5/25

(54) **Organe de manoeuvre**
Betätigungsorgan
Operating member

(30) Priorité: 16.09.2003 FR 0310870
(43) Date de publication de la demande: 23.03.2005
(73) Titulaire: Thales, 92526 Neuilly Sur Seine (FR)
(72) Inventeur: Raymond, Gilles, Thales Int. Prop., 94117, Arcueil (FR)
(74) Mandataire: Collet, Alain

(56) Documents cités:
- EP-A- 0 661 908
- US-A- 4 866 219

## Description

L'invention se rapporte à un organe de manoeuvre comportant une tige, mobile en translation suivant un axe, par rapport à un boîtier, autour d'une position d'équilibre. L'invention trouve une utilité particulière mais non exclusive pour un codeur rotatif. Plus précisément un codeur rotatif est un dispositif permettant la saisie de données au moyen de la rotation d'une tige autour d'un axe. Les données peuvent être codées optiquement dans une partie électronique du dispositif. Le codeur peut également présenter des moyens supplémentaires d'entrée de données lorsque la tige est tirée ou poussée autour d'une position d'équilibre. Un effort en translation, orienté suivant l'axe précédemment défini pour la rotation, est alors appliqué à la tige. Les moyens supplémentaires d'entrée de données peuvent être utilisés pour valider une donnée saisie par la rotation de la tige.

Pour rendre ce type de codeur plus ergonomique, on peut prévoir plusieurs positions d'équilibre dans la rotation de la tige, chaque position matérialisant une donnée distincte. Les positions d'équilibre peuvent être séparées par un point dur. Plus précisément, le couple à appliquer à la tige pour passer d'une position d'équilibre à la suivante passe par un maximum. Ceci permet à un utilisateur manoeuvrant le codeur de ressentir le passage à chaque position d'équilibre. Par contre, on n'a jamais prévu de point dur pour l'effort à exercer lorsque l'utilisateur pousse ou tire la tige du codeur. L'utilisateur est alors tenu soit d'observer que la donnée entrée au moyen de la translation de la tige est bien saisie soit d'appliquer à la tige un effort en translation très nettement supérieur à l'effort requis pour saisir la donnée au risque d'endommager le codeur.

Le document DE 38 34 390, HIRSCHFELD Klaus et ABEL Thomas, décrit un commutateur électrique à mouvement rotatif angulaire et déplacement axial présentant un point dur dans son déplacement axial.

L'invention a pour but d'améliorer l'ergonomie des codeurs existants équipés d'une fonction tirer/pousser en permettant à un utilisateur de ressentir par le touché la saisie d'une donnée lorsqu'il tire ou lorsqu'il pousse la tige du codeur.

A cet effet, l'invention a pour objet un organe de manoeuvre selon la revendication 1.

L'invention sera mieux comprise et d'autres avantages apparaîtront à la lecture de la description détaillée d'un mode de réalisation de l'invention donné à titre d'exemple, description illustrée par le dessin joint dans lequel :
- la figure 1 représente vue en coupe par l'axe d'une tige, un codeur mettant en oeuvre l'invention ;
- la figures 2 représente vue en coupe par un axe perpendiculaire à l'axe de la tige une pièce mécanique formant le boîtier du codeur.

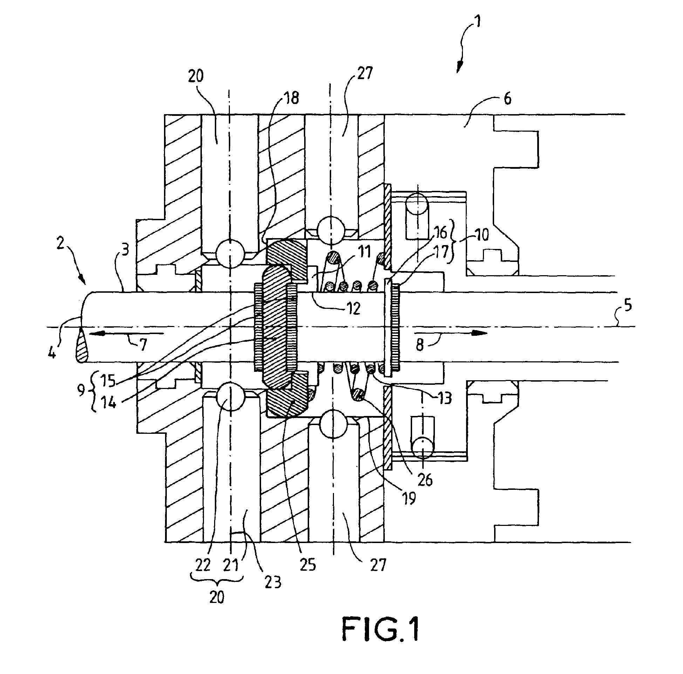

La figure 1 représente un codeur 1 comportant un organe de manoeuvre 2 permettant à un utilisateur de saisir des données. L'organe de manoeuvre 2 comporte une tige 3 dont une extrémité 4 est manoeuvrée par l'utilisateur. Avantageusement, la tige 3 est libre en rotation autour d'un axe 5 par rapport à un boîtier 6 afin de permettre à l'organe de manoeuvre 2 de délivrer une information lorsqu'il est manoeuvré en rotation autour de l'axe 5. La manoeuvre de la tige 3 peut se faire par l'intermédiaire d'un bouton, non représenté, fixé sur l'extrémité 4 de la tige 3.

La tige 3 est mobile en translation suivant l'axe 5, par rapport au boîtier 6, autour d'une position d'équilibre représentée sur la figure 1. Sous l'action de l'utilisateur, la tige 3 se déplace en translation dans un premier sens, dit « tirer » et matérialisé par la flèche 7, au-delà de la position d'équilibre lorsque la tige 3 est soumise à un effort suivant l'axe 5, l'effort étant orienté dans le premier sens 7 jusqu'à atteindre une première position pour laquelle l'organe de manoeuvre 2 délivre une première information. Sous l'action de l'utilisateur, la tige 3 se déplace en translation dans un second sens dit « pousser » et matérialisé par la flèche 8, opposé au premier sens 7 au-delà de la position d'équilibre lorsque la tige 3 est soumise à un effort suivant l'axe 5, l'effort étant orienté dans le second sens 8 jusqu'à atteindre une seconde position pour laquelle l'organe délivre une seconde information. Selon l'invention, l'organe comporte des moyens pour présenter un point dur lors du déplacement de la tige 3 de la position d'équilibre vers la première ou la seconde position.

Avantageusement, l'organe de manoeuvre 2 comporte des moyens pour présenter un point dur lors du déplacement de la tige 3 de la position d'équilibre vers la première position et des moyens pour présenter un point dur lors du déplacement de la tige 3 de la position d'équilibre vers la seconde position. Autrement dit l'organe de manoeuvre 2 comporte deux points durs de part et d'autre de la position d'équilibre. L'un est dépassé lorsque l'utilisateur pousse la tige 3 à partir de la position d'équilibre, et l'autre est dépassé lorsque l'utilisateur tire la tige 3 à partir de la position d'équilibre.

Les moyens pour présenter un point dur lors du déplacement de la tige 3 de la position d'équilibre vers la première position comportent avantageusement un premier cliquet 9 et un épaulement 10 solidaires de la tige 3, une rondelle 11 traversée par la tige 3 au niveau d'un orifice 12 de la rondelle 11, la rondelle 11 étant libre en rotation le long de la tige 3 suivant l'axe 5 entre le premier cliquet 9 et l'épaulement 10, un premier élément ressort 13 disposé entre l'épaulement 10 et la rondelle 11 et des moyens pour maintenir la rondelle 11 immobile par rapport au boîtier 6 lorsque la tige 3 est soumise à un effort dans le premier sens 7. Plus précisément, le premier cliquet 9 a la forme d'un collet réalisé sur la tige 3. Pour faciliter la réalisation de ce collet, le premier cliquet 9 peut comporter une rondelle 14 percée au diamètre extérieur de la tige 3 et immobilisé en translation par rapport à la tige 3 au moyen de deux segments d'arrêt 15 positionnés chacun dans des gorges de la tige 3 de part et d'autre de la rondelle 14. De même pour faciliter la réalisation de l'épaulement 10, il peut comporter une rondelle 16 percée au diamètre extérieur de la tige 3 et maintenue en appui contre un segment arrêt 17 positionné dans une gorge de la tige 3. Le segment arrêt 17 forme un arrêt en translation de la rondelle 16 par rapport à la tige 3 suivant l'axe 5 dans le second sens 8. Le premier élément ressort 13 est par exemple formé par un ressort hélicoïdal. Les moyens pour maintenir la rondelle 11 immobile par rapport au boîtier 6 lorsque la tige 3 est soumise à un effort dans le premier sens 7 comportent par exemple un épaulement 18 réalisé dans un alésage 19 du boîtier 6. La rondelle 11 prend appui contre l'épaulement 18 lorsque la tige est déplacée dans le premier sens 7.

Avantageusement, les moyens pour présenter un point dur lors du déplacement de la tige 3 de la position d'équilibre vers la première position comportent un premier élément 20 s'opposant au déplacement du premier cliquet 9 dans le premier sens 7 et s'escamotant lors du passage du premier cliquet 9 devant le premier élément 20. Le premier élément 20 est par exemple formé par une vis à bille ou un canon à bille. La vis ou le canon comporte un corps 21 fixé au boîtier 6 et une bille 22 susceptible de se déplacer par rapport au corps 21 suivant un axe 23 sensiblement perpendiculaire à l'axe 5. La vis ou le canon comporte en outre un élément ressort 24 s'opposant au déplacement de la bille 22 le long de l'axe 23 dans une direction s'éloignant de l'axe 5. Lors du déplacement du premier cliquet 9 dans le premier sens 7, l'effort que doit fournir l'utilisateur est égal à la superposition de deux efforts : l'effort appliqué par le premier élément ressort 13 et l'effort nécessaire au premier cliquet 9 pour repousser la bille 22. L'effort appliqué par le premier élément ressort 13 est proportionnel à la course de la tige 3 le long de l'axe 5 dans le premier sens 7. L'effort nécessaire au premier cliquet 9 pour repousser la bille 22 constitue le point dur. Il s'agit d'un effort que doit vaincre l'utilisateur sur une faible partie de la course de la tige 3 séparant la position d'équilibre de la tige 3 et la première position. Le point dur est ressenti par le toucher de l'utilisateur.

Afin d'équilibrer l'effort nécessaire au premier cliquet 9 pour repousser la bille 22 par rapport à l'axe 5 l'organe de manoeuvre 2 peut comporter plusieurs élément 20 dont les axes respectifs sont concourants sur l'axe 5. Sur la figure 1 deux éléments 20 sont représentés et leurs axes respectifs sont dans le prolongement l'un de l'autre.

Les différents éléments formant les moyens pour présenter un point dur lors du déplacement de la tige 3, à savoir le premier cliquet 9, l'épaulement 10, la rondelle 11, le premier élément ressort 13, les moyens pour maintenir la rondelle 11 immobile par rapport au boîtier 6 lorsque la tige 3 est soumise à un effort dans le premier sens 7, et le premier élément 20 sont tous disposés autour de la tige 3. Autrement dit, aucun de ces éléments n'est disposé dans le prolongement de la tige 3. Cette disposition permet de mettre en oeuvre l'invention sur un équipement existant, tel que par exemple un codeur optique, sans modifier la longueur de la tige 3.

Avantageusement, les moyens pour présenter un point dur lors du déplacement de la tige 3 de la position d'équilibre vers la seconde position comportent un second cliquet 25 ayant la forme d'une rondelle traversée par la tige 3. Lorsque la tige 3 est à dans la position d'équilibre le premier cliquet 9 est en appui contre le second cliquet 25 sous l'action du premier élément ressort 13 et le second cliquet 25 est en appui contre le boîtier 6 sous l'action d'un second élément ressort 26 disposé entre le second cliquet 25 et le boîtier 6. Le second élément ressort 26 tend repousser le second cliquet 25 suivant l'axe 5 dans le premier sens 7 pour le maintenir appui contre le boîtier 6 et plus précisément contre l'épaulement 18. Lorsque la tige 3 est à dans la position d'équilibre, la rondelle 11 est en appui contre le boîtier 6 par l'intermédiaire du second cliquet 25.

Avantageusement, les moyens pour présenter un point dur lors du déplacement de la tige 3 de la position d'équilibre vers la seconde position comportent un second élément 27 s'opposant au déplacement du second cliquet 25 dans le second sens 8 et s'escamotant lors du passage du second cliquet 25 devant le second élément 27. Comme pour l'élément 20, il est possible de disposer plusieurs élément 27 autour de la tige 3. Sur la figure 1 deux éléments 27 sont représentés dans le prolongement l'un de l'autre.

Avantageusement, pour standardiser les éléments formant l'organe de manoeuvre, le premier élément 20 et le second élément 27 peuvent être identiques.

Lors du déplacement du second cliquet 25 dans le second sens 8, l'effort que doit fournir l'utilisateur est égal à la superposition de deux efforts : l'effort appliqué par le second élément ressort 26 et l'effort nécessaire au second cliquet 25 pour repousser la bille 22. L'effort appliqué par le second élément ressort 26 est proportionnel à la course de la tige 3 le long de l'axe 5 dans le second sens 8. L'effort nécessaire au second cliquet 25 pour repousser la bille 22 constitue le point dur.

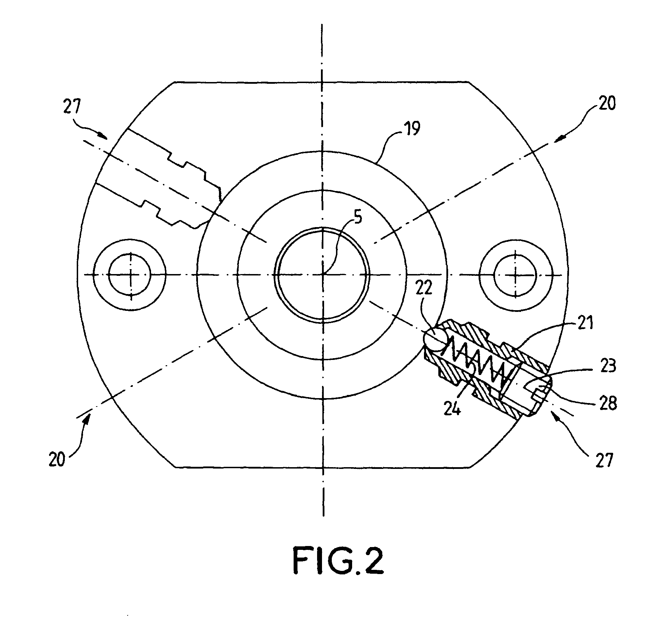

La figure 2 représente en coupe par un plan perpendiculaire à l'axe 5, le boîtier 6 dans lequel est monté un élément 27 et plus précisément un canon à bille comportant le corps 21, la bille 22, l'élément ressort 24 sous forme d'un ressort hélicoïdal et une vis 28 permettant le réglage de l'effort exercé par l'élément ressort 24 sur la bille 22. Comme on l'a vu précédemment, on peut placer un autre élément 27 disposé de façon symétrique par rapport à l'intersection de l'axe 23 et de l'axe 5.

Si on souhaite rapprocher les deux points durs de la position d'équilibre il sera difficile de disposer les éléments 20 et 27 dans un même plan contenant l'axe 5 comme représenté sur la figure 1. Pour palier cette difficulté, on peut disposer les éléments 20 et 27 dans des plans différents mais contenant l'axe 5. Cette disposition est représentée sur la figure 2. Pour ne pas surcharger la figure seuls les axes 23 des éléments 20 ont été représentés

## Revendications

1. Organe de manoeuvre (2) comportant une tige (3), mobile en translation suivant un axe (5), par rapport à un boîtier (6), autour d'une position dite position d'équilibre, la tige (3) se déplaçant en translation dans un premier sens (7) au-delà de la position d'équilibre lorsque la tige (3) est soumise à un effort suivant l'axe (5), l'effort étant orienté dans le premier sens (7) jusqu'à atteindre une première position pour laquelle l'organe de manoeuvre (2) délivre une première information, la tige (3) se déplaçant en translation dans un second sens (8) opposé au premier sens (7) au-delà de la position d'équilibre lorsque la tige (3) est soumise à un effort suivant l'axe (5), l'effort étant orienté dans le second sens (8) jusqu'à atteindre une seconde position pour laquelle l'organe (2) délivre une seconde information, l'organe de manoeuvre (2) comportant des moyens (9, 10, 11, 20 ; 25, 26, 27) pour présenter un point dur lors du déplacement de la tige (3) de la position d'équilibre vers la première position, **caractérisé en ce que** l'organe de manoeuvre (2) comporte des moyens pour revenir à la position d'équilibre lorsque l'effort est relâché.

2. Organe selon la revendication 1, **caractérisé en ce qu'**il comporte des moyens (25, 26, 27) pour présenter un point dur lors du déplacement de la tige (3) de la position d'équilibre vers la seconde position.

3. Organe selon l'une des revendications précédentes, **caractérisé en ce que** les moyens (9, 10, 11, 20 ; 25, 26, 27) pour présenter un point dur lors du déplacement de la tige (3) sont disposés autour de la tige (3).

4. Organe selon l'une des revendications précédentes, **caractérisé en ce que** la tige (3) est libre en rotation autour de l'axe (5) par rapport au boîtier (6) afin de permettre à l'organe de manoeuvre (2) de délivrer une troisième information lorsqu'il est manoeuvré en rotation autour de l'axe (5).

5. Organe selon l'une des revendications précédentes, **caractérisé en ce qu'**il comporte un premier cliquet (9) et un épaulement (10) solidaires de la tige (3), une rondelle (11) traversée par la tige (3) au niveau d'un orifice (12) de la rondelle (11), la rondelle (11) étant libre en rotation le long de la tige (3) suivant l'axe (5) entre le premier cliquet (9) et l'épaulement (10), un premier élément ressort (13) disposé entre l'épaulement (10) et la rondelle (11) et des moyens pour maintenir la rondelle (11) immobile par rapport au boîtier (6) lorsque la tige (3) est soumise à un effort dans le premier sens (7).

6. Organe selon la revendication 5, **caractérisé en ce que** les moyens pour présenter un point dur comportent un premier élément (20) s'opposant au déplacement du premier cliquet (9) dans le premier sens (7) et s'escamotant lors du passage du premier cliquet (9) devant le premier élément (20).

7. Organe selon l'une quelconque des revendications 5 ou 6, **caractérisé en ce que** les moyens pour maintenir la rondelle immobile comportent un second cliquet (25) maintenu en appui contre le boîtier (6) lorsque la tige (3) est soumise à un effort dans le premier sens (7).

8. Organe selon la revendication 7, **caractérisé en ce qu'**il comporte un second élément ressort (26) disposé entre le second cliquet (25) et le boîtier (6).

9. Organe selon la revendication 8, **caractérisé en ce que** les moyens pour présenter un point dur comportent un second élément (27) s'opposant au déplacement du second cliquet (25) dans le second sens (8) et s'escamotant lors du passage du second cliquet (25) devant le second élément (27).

10. Organe selon la revendication 9 en tant que revendication dépendante de la revendication 6, **caractérisé en ce que** le premier (20) et le second (27) éléments comportent une bille (22) et un troisième élément ressort (24) repoussant la bille (22) en direction de la tige (3) sensiblement perpendiculairement à l'axe (5).

## Claims

1. An operating member (2) including a rod (3), capable of translatory movement along an axis (5), relative to a housing (6) around a position referred to as the neutral position, the rod (3) carrying out a translatory movement in a first direction (7) beyond the neutral position when the rod (3) experiences a force along the axis (5), the force being oriented in the first direction (7) until it reaches a first position for which the operating member (2) provides a first item of information, the rod (3) carrying out a translatory movement in a second direction (8) opposite the first direction (7) beyond the neutral position when the rod (3) experiences a force along the axis (5), the force being oriented in the second direction (8) until it reaches a second position for which the member (2) provides a second item of information, the operating member (2) including means (9, 10, 11, 20; 25, 26, 27) for presenting a hard spot during a movement of the rod (3) from the neutral position to the first position, **characterised in that** the operating member (2) includes means for returning to the neutral position when the force is released.

2. The member according to claim 1, **characterised in that** it includes means (25, 26, 27) for presenting a hard spot during a movement of the rod (3) from the neutral position to the second position.

3. The member according to any one of the previous claims, **characterised in that** the means (9, 10, 11, 20; 25, 26, 27) for presenting a hard spot during a movement of the rod (3) are disposed around the rod (3).

4. The member according to any one of the previous claims, **characterised in that** the rod (3) is free to rotate around the axis (5) relative to the housing (6) in order to allow the operating member (2) to provide a third item of information when it rotates around the axis (5).

5. The member according to any one of the previous claims, **characterised in that** it includes a first latch (9) and a collar (10) integral with the rod (3), a washer (11) which is traversed by the rod (3) through a hole (12) in the washer (11), the washer (11) being free to rotate the length of the rod (3) along the axis (5) between the first latch (9) and the collar (10), a first spring element (13) disposed between the collar (10) and the washer (11) and means for immobilising the washer (11) relative to the housing (6) when the rod (3) experiences a force in the first direction (7).

6. The member according to claim 5, **characterised in that** the means for presenting a hard spot include a first element (20) resisting movement of the first latch (9) in the first direction (7) and which retracts when the first latch (9) passes said first element (20).

7. The member according to any one of claims 5 to 6, **characterised in that** the means for immobilising the washer include a second latch (25) maintained in abutment against the housing (6) when the rod (3) experiences a force in the first direction (7).

8. The member according to claim 7, **characterised in that** it includes a second spring element (26) disposed between the second latch (25) and the housing (6).

9. The member according to claim 8, **characterised in that** the means for presenting a hard spot include a second element (27) resisting movement of the second latch (25) in the second direction (8) and which retracts when the second latch (25) passes said second element (27).

10. The member according to claim 9 as dependent on claim 6, **characterised in that** the first (20) and the second (27) elements include a ball (22) and a third spring element (24) which forces the ball (22) back towards the rod (3) essentially perpendicular to the axis (5).

## Patentansprüche

1. Betätigungsvorrichtung (2) mit einem Stab (3), der entlang einer Achse (5) relativ zu einem Gehäuse (6) um eine Position, Beharrungsposition genannt, translational beweglich ist, wobei sich der Stab (3) in einer ersten Richtung (7) über die Beharrungsposition hinaus translational bewegt, wenn der Stab (3) eine Kraft entlang der Achse (5) erfährt, wobei die Kraft in der ersten Richtung (7) orientiert ist, bis er eine erste Position erreicht, für die die Betätigungsvorrichtung (2) eine erste Information gibt, wobei der Stab (3) in einer zweiten Richtung (8), entgegengesetzt zur ersten Richtung (7), über die Beharrungsposition hinaus translational beweglich ist, wenn der Stab (3) eine Kraft entlang der Achse (5) erfährt, wobei die Kraft in der zweiten Richtung (8) orientiert ist, bis sie eine zweite Position erreicht, für die die Vorrichtung (2) eine zweite Information gibt, wobei die Betätigungsvorrichtung (2) Mittel (9, 10, 11, 20; 25, 26, 27) zum Bilden eines Anschlags beinhaltet, wenn sich der Stab (3) von der Beharrungsposition in die erste Position bewegt, **dadurch gekennzeichnet, dass** die Betätigungsvorrichtung (2) Mittel zum Zurückkehren in die Beharrungsposition beinhaltet, wenn die Kraft weggenommen wird.

2. Vorrichtung nach Anspruch 1, **dadurch gekennzeichnet, dass** sie Mittel (25, 26, 27) zum Bilden eines Anschlags aufweist, wenn sich der Stab (3) von der Beharrungsposition in die zweite Position bewegt.

3. Vorrichtung nach einem der vorherigen Ansprüche, **dadurch gekennzeichnet, dass** die Mittel (9, 10, 11, 20; 25, 26, 27) zum Bilden eines Anschlags beim Bewegen des Stabs (3) um den Stab (3) herum angeordnet sind.

4. Vorrichtung nach einem der vorherigen Ansprüche, **dadurch gekennzeichnet, dass** der Stab (3) um die Achse (5) relativ zum Gehäuse (6) frei rotieren kann, damit die Betätigungsvorrichtung (2) eine dritte Information geben kann, wenn sie um die Achse (5) bewegt wird.

5. Vorrichtung nach einem der vorherigen Ansprüche, **dadurch gekennzeichnet, dass** sie Folgendes umfasst: eine erste Sperrklinke (9) und einen an den Stab (3) angeformten Ansatz (10), eine Scheibe (11) mit einem Loch (12), durch das der Stab (3) verläuft, wobei die Scheibe (11) über die Länge des Stabs (3) um die Achse (5) zwischen der ersten Sperrklinke (9) und dem Ansatz (10) frei rotieren kann, ein erstes Federelement (13), das zwischen dem Ansatz (10) und der Scheibe (11) angeordnet ist, und Mittel zum Festhalten der Scheibe (11) relativ zum Gehäuse (6), wenn der Stab (3) eine Kraft in der ersten Richtung (7) erfährt.

6. Vorrichtung nach Anspruch 5, **dadurch gekennzeichnet, dass** das Mittel zum Bilden eines Anschlags ein erstes Element (20) aufweist, das einer Bewegung der ersten Sperrklinke (9) in der ersten Richtung (7) widersteht und sich zurückzieht, wenn die erste Sperrklinke (9) das erste Element (20) passiert.

7. Vorrichtung nach Anspruch 5 oder 6, **dadurch gekennzeichnet, dass** die Mittel zum Festhalten der Scheibe eine zweite Sperrklinke (25) aufweisen, die in Anlage an dem Gehäuse (6) gehalten wird, wenn der Stab (3) eine Kraft in der ersten Richtung (7) erfährt.

8. Vorrichtung nach Anspruch 7, **dadurch gekennzeichnet, dass** sie ein zweites Federelement (26) aufweist, das zwischen der zweiten Sperrklinke (25) und dem Gehäuse (6) angeordnet ist.

9. Vorrichtung nach Anspruch 8, **dadurch gekennzeichnet, dass** die Mittel zum Bilden eines Anschlags ein zweites Element (27) aufweisen, das einer Bewegung der zweiten Sperrklinke (25) in der zweiten Richtung (8) widersteht und sich zurückzieht, wenn die zweite Sperrklinke (25) das zweite Element (27) passiert.

10. Vorrichtung nach Anspruch 9 in Abhängigkeit von Anspruch 6, **dadurch gekennzeichnet, dass** das erste (20) und das zweite (27) Element eine Kugel (22) und ein drittes Federelement (24) aufweisen, das die Kugel (22) zurück zum Stab (3) hin im Wesentlichen lotrecht zur Achse (5) drückt.
